# EUROPÄISCHE PATENTSCHRIFT

(11) **EP 2 555 898 B1**
(45) Veröffentlichungstag und Bekanntmachung des Hinweises auf die Patenterteilung: **25.02.2015**
(21) Anmeldenummer: 11718919.1
(22) Anmeldetag: 06.04.2011
(51) Int. Cl.: B23H 3/04, B23H 3/10, B23H 9/00

(54) **VERFAHREN UND ELEKTRODE ZUM ELEKTROCHEMISCHEN BEARBEITEN EINES WERKSTÜCKS**
METHOD AND ELECTRODE FOR ELECTROCHEMICALLY PROCESSING A WORKPIECE
PROCÉDÉ ET ÉLECTRODE POUR L'USINAGE ÉLECTROCHIMIQUE D'UNE PIÈCE

(30) Priorität: 08.04.2010 DE 102010014242
(43) Veröffentlichungstag der Anmeldung: 13.02.2013
(73) Patentinhaber: MTU Aero Engines AG, 80995 München (DE)
(72) Erfinder: BAYER, Erwin, 85221 Dachau (DE); HUTTNER, Roland, 82287 Jesenwang (DE)
(86) Internationale Anmeldenummer: PCT/DE2011/000363
(87) Internationale Veröffentlichungsnummer: WO 2011/124208

(56) Entgegenhaltungen:
- WO-A1-00/56513
- WO-A1-2010/136009
- AT-B- 209 131
- FR-A- 1 437 641
- US-A- 3 271 281
- US-A- 3 305 470
- THE CINCINNATI MACHINE CO: "Outillage pout l'usinage électrochimique", MACHINE MODERNE, MACHINE MODERNE. PARIS, FR, 1. November 1969 (1969-11-01), Seiten 51-56, XP002599696,

## Beschreibung

Die Erfindung betrifft ein Verfahren zum elektrochemischen Bearbeiten eines Werkstücks nach dem Oberbegriff des Patentanspruchs 1 und eine Elektrode zur Durchführung eines derartigen Verfahrens nach dem Oberbegriff des Patentanspruchs 5. Ein solches Verfahren und eine solche Elektrode sind aus der FR 1 437 641 A bekannt.

Mittels elektrochemischer Bearbeitung (ECM) bzw. gepulster elektrochemischer Bearbeitung (PECM) können Werkstückoberflächen sehr präzise und materialschonend bearbeitet werden. Dabei wird zwischen einem als Anode dienenden Werkstück und einer gegenüber dem zu bearbeitenden Werkstückbereich positionierten und als Kathode bzw. Werkzeug dienenden Elektrode eine Potentialdifferenz aufgebaut und das Werkstückmaterial über einen Elektrolyten, beispielsweise eine Kochsalzlösung, abgetragen. Da die Elektrode meist die Sollkontur der zu bearbeitenden Werkstückflächen abbildet, kann der Werkstückbereich quasi in einem Schritt bearbeitet werden.

Die elektrochemische Bearbeitung geht auf eine russische Entwicklung zurück und wurde bspw. bereits 1929 vom Reichspatentamt unter der Nummer DE565765 patentiert. Der wesentliche Unterschied zwischen dem ECM-Verfahren und dem PECM-Verfahren besteht darin, dass beim PECM-Verfahren die Elektrode eine gepulste Bewegung in Vorschubrichtung ausführt, so dass ein von dem Elektrolyten gefüllter enger Bearbeitungsspalt zwischen der Elektrode und dem Werkstück geöffnet bzw. vergrößert wird und somit der verbrauchte Elektrolyt einfacher abströmen kann.

Problematisch beim elektrochemischen Bearbeiten ist jedoch die Steuerung des Elektrolytflusses. In der DE 1515195 A1 wird daher eine Elektrode vorgeschlagen, die aus einer Vielzahl von elektrisch voneinander isolierten Teilelektroden besteht, die in Abhängigkeit von einer Relativstellung zwischen der Elektrode und dem Werkstück angesteuert bzw. aktiviert werden.

Ebenso ist es aus der DE 10 2007 023 494 A1 insbesondere zur Ausbildung von Fluidlagern bekannt, jene Flächenbereiche einer Elektrode mit einer elektrischen Isolation zu versehen, mittels denen kein Materialabtrag erfolgen soll.

Die Anmeldung DE 10 2004 040 217 A1 der Anmelderin zeigt ein ECM/PECM-Verfahren zur Ausbildung einer Absenkung in einem Werkstück. Das Werkstück wird in einem Elektrolyttauchbad positioniert und eine bestromte Elektrode in das Werkstück abgesenkt. Es hat sich jedoch gezeigt, dass entstehende seitliche Werkzeugflächen der Absenkung, d.h. Werkstückflächen parallel zur Vorschubrichtung bzw. Werkstückflächen, die einen Seitenspalt mit der Elektrode begrenzen, mit einer verringerten Oberflächenqualität ausgebildet werden als eine bodenseitige Werkstückfläche der Absenkung, was eine nachträgliche Bearbeitung der seitlichen Werkzeugflächen erforderlich macht, wodurch es im Übergangsbereich zur bodenseitigen Werkzeugfläche zu Störungen kommen kann.

Zwar sind Elektroden mit ausfahrbaren Teilelektroden bekannt, jedoch ist die mechanische Realisierung sehr aufwendig. Des Weiteren ist es bekannt, die Absenkung zweistufig zu bearbeiten, so dass zuerst die Bodenfläche und dann die Seitenflächen der Absenkung bearbeitet werden. Dabei werden die Seitenflächen mit einer Spezialelektrode gesenkt, die möglichst orthogonal auf die Seitenflächen gefahren wird. Nachteilig an dieser bekannten Variante ist insbesondere, dass mit einem doppelten Elektrodensatz gearbeitet werden muss und dass beim Absenken der Seitenflächen im Bereich der Bodenfläche Anätzungen entstehen können.

Die Aufgabe der vorliegenden Erfindung besteht darin, ein Verfahren und eine Elektrode zu schaffen, die die vorgenannten Nachteile beseitigen und eine gezielte Steuerung eines Elektrolytflusses und somit eine lokale Aktivierung einzelner Elektrodenflächenbereiche ermöglicht.

Diese Aufgabe wird gelöst durch ein Verfahren mit den Merkmalen des Patentanspruchs 1 oder durch eine Elektrode mit den Merkmalen des Patentanspruchs 5.

Ein erfindungsgemäßes Verfahren zum elektrochemischen Bearbeiten eines Werkstücks mit einer Elektrode, die zumindest eine Wirkfläche zum Absenken einer Werkstückfläche hat und mit einem Elektrolyten, ist dadurch gekennzeichnet, dass der Elektrolyt von der Wirkfläche abgesaugt wird. Hierdurch wird der Elektrolyttluss nur auf die Wirkfläche bzw. den aktuell benötigten Wirkbereich der Elektrode beschränkt, so dass nur in diesem eine Abtragung des Werkstückmaterials erfolgt. An die Wirkfläche angrenzende Flächenbereiche der Elektrode sind und bleiben trocken, so dass bspw. beim Absenken einer Werkstückfläche im Seitenspalt kein Abtrag oder Ätzangriff erfolgt. Der Elektrolytfluss wird über die Wirkfläche gezielt gesteuert und es erfolgt eine lokale Aktivierung einzelner Elektrodenflächenbereiche. Des Weiteren ermöglicht die Absaugung einen sparsamen Einsatz des Elektrolyten, da weder ein Tauchbad notwendig ist, noch der verbrauchte Elektrolyt unkontrolliert abströmt.

Bevorzugterweise wird der Elektrolyt im Innenbereich der Wirkfläche zugeführt und im Randbereich der Wirkfläche abgesaugt. Bei diesem Ausführungsbeispiel umgreift die Elektrolytabsaugung quasi die Elektrolytzuführung, wodurch ein versehentliches Aktivieren benachbarter Elektrodenflächen wirkungsvoll verhindert wird. In Abhängigkeit von der Größe der Wirkfläche kann es vorteilhaft sein, wenn eine zusätzliche Absaugung im Innenbereich erfolgt.

Bei einem Ausführungsbeispiel wird der Elektrolyt durch die Elektrode hindurch zur Wirkfläche geführt und durch die Elektrode hindurch von der Wirkfläche abgesaugt. Hierdurch wird in der Elektrode ein Elektrolytkreislauf ausgebildet, was einen sehr kompakten vorrichtungstechnischen Aufbau ermöglicht.

Bei einem Verfahren zur Ausbildung einer Absenkung wird die Elektrode gegenüber einer zu bearbeitenden Werkstückfläche positioniert. Dann wird durch Einschalten des Elektrolytkreislaufes mit einer Elektrolytzuführung und einer Elektrolytabsaugung die Wirkfläche definiert. Anschließend wird eine Kathodenspannung angelegt und die Elektrode in Vorschubrichtung bewegt, bis die Werkstückfläche auf Sollkontur bearbeitet ist. Dann wird die Kathodenspannung abgeschaltet, die Vorschubbewegung gestoppt und der Elektrolytzufluss unterbrochen. Die Elektrolytabsaugung wird abgeschaltet, sobald die bearbeitete Werkstückfläche trocken ist. Dann werden die vorgenannten Schritte wiederholt, bis alle zu bearbeitenden Werkstückflächen wie beispielsweise Seitenflächen der Absenkung, bearbeitet sind, wobei sich die Vorschubrichtung und die Wirkfläche entsprechend den zu bearbeitenden Werkstückflächen ändern. Dieses mehrachsige Verfahren eignet sich insbesondere zur Ausbildung der Absenkung mit einer Hinterschneidung oder andersartiger winkelig zueinander stehender Werkstückflächen. Insbesondere kann bei diesem Verfahren stets die gesamte Elektrode, also sämtliche potentielle Wirkflächen, bestromt sein, da der Elektrolyt nur zur momentan benötigten Wirkfläche geführt und von dieser zumindest im Randbereich abgesaugt wird, so dass die benachbarten potentiellen Wirkflächen trocken sind und über diese kein Materialabtrag erfolgt.

Eine erfindungsgemäße Elektrode zur elektrochemischen Bearbeitung eines Werkstückes hat zumindest eine Wirkfläche. Erfindungsgemäß sind in der Elektrode zumindest eine Elektrolytzuführung zur Zuführung des Elektrolyten auf die Wirkfläche und eine Elektrolytabsaugung zur Absaugung des Elektrolyten von der Wirkfläche ausgebildet. Die erfindungsgemäße Elektrode erlaubt insbesondere die gezielte lokale Aktivierung einzelner Wirkflächen, so dass sie sich insbesondere für elektrochemische Verfahren wie der Ausbildung einer Absenkung mit präzisen Boden- und Seitenflächen eignet. Auf bekannte Maßnahmen wie Schutzströme, Passivierung oder selektiven Ätzangriff kann bei der erfindungsgemäßen Lösung verzichtet werden. Folglich ist der vorrichtungs- und steuerungstechnische Aufwand sehr gering, insbesondere kann stets die gesamte Elektrode bestromt werden, da der Elektrolyt gezielt auf die Wirkfläche geführt und von dieser abgesaugt werden kann und somit benachbarte Elektrodenbereiche trocken sind bzw. bleiben.

Bei einem Ausführungsbeispiel umfasst die Elektrolytzuführung und die Elektrolytabsaugung eine Vielzahl von Kanälen, die in Form eines Lochmusters aus der Wirkfläche austreten. Die Kanäle können beispielsweise mechanisch mittels eines Bohrers ausgebildet werden, jedoch ist es ebenfalls vorstellbar, die gesamte Elektrode mittels eines generativen Herstellungsverfahrens herzustellen.

Die Wirkfläche kann jedoch auch zur Erhöhung der Abbildgenauigkeit eine poröse Flächenstruktur aufweisen, die mit den Kanälen in Fluidverbindung steht.

Die Elektrode kann modulartig aus einer Vielzahl von Segmenten mit jeweils zumindest einer Wirkfläche zusammengesetzt sein. Hierdurch ist es möglich, Elektroden mit beliebiger Geometrie und beliebigen Ausmaßen fertigungstechnisch einfach und kostengünstig herzustellen.

Die Segmente können jeweils über eine Isolationsschicht elektrisch voneinander getrennt sein, so dass selbst in dem unwahrscheinlichen Fall, dass der Elektrolyt in nicht aktivierte, an die Wirkfläche angrenzende Flächenbereiche der Elektrode abströmt, ein Abtrag bzw. Ätzangriff in diesem Bereich effektiv verhindert wird.

Sonstige vorteilhafte Ausführungsbeispiele der vorliegenden Erfindung sind Gegenstand weiterer Unteransprüche.

Im Folgenden wird ein bevorzugtes Ausführungsbeispiel der Erfindung anhand der schematischen Zeichnungen näher erläutert. Es zeigen:
Figur 1 einen Querschnitt durch eine erfindungsgemäße Elektrode und einen ersten Verfahrensschritt zur Ausbildung zur Absenkung, und
Figur 2 einen zweiten Verfahrensschritt zur Ausbildung der Absenkung.

In den vorliegenden Figuren tragen gleiche konstruktive Elemente die gleichen Bezugsziffern, wobei bei mehreren gleichen konstruktiven Elementen in einer Figur aus Gründen der Übersichtlichkeit nur einige mit einer Bezugsziffer versehen sind.

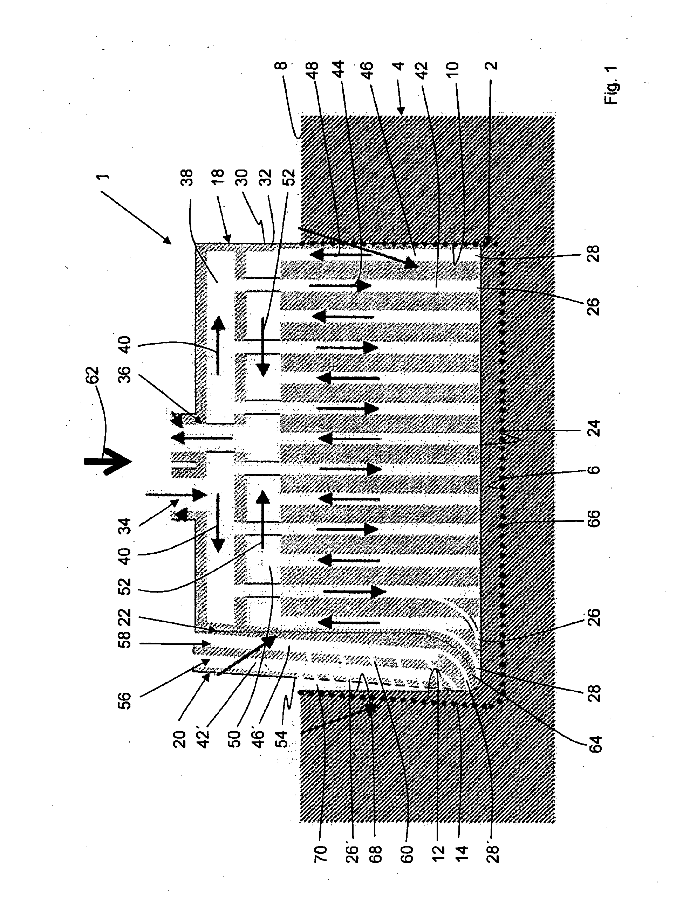

Figur 1 zeigt einen Querschnitt durch eine erfindungsgemäße Elektrode 1 zur Ausbildung einer Absenkung 2 in einem Werkstück 4.

Die auszubildende Absenkung 2 ist durch die gepunktete Linie angedeutet und soll im Querschnitt eine Bodenfläche 6, die in diesem Ausführungsbeispiel parallel zur Oberfläche 8 des Werkstücks 4 verläuft, eine Seitenfläche 10, die sich rechtwinklig zwischen der Bodenfläche 6 und der Oberfläche 8 erstreckt sowie eine gegenüberliegende Seitenfläche 12 aufweisen, die derart zur Bodenfläche 6 und zur Oberfläche 8 angestellt ist, dass eine Hinterschneidung 14 gebildet wird.

Die Elektrode 1 hat einen Elektronenkörper, der sich modulartig aus einem Basissegment 18 und einem Seitensegment 20 zusammensetzt, die über eine Isolationsschicht 22 elektrisch voneinander getrennt sind.

Das Basissegment 18 hat eine als Wirkfläche aktivierbare Stirnfläche 24 zur Ausbildung der Bodenfläche 6, in der eine Vielzahl von ersten Austrittsöffnungen 26 und ersten Eintrittsöffnungen 28 für einen Elektrolyten angeordnet sind. Die ersten Austritts- und Eintrittsöffnungen 26, 28 bilden in dem gezeigten Ausführungsbeispiel ein Lochmuster und sind abwechselnd nebeneinander angeordnet, wobei die ersten Eintrittsöffnungen 28 im Innen- und Randbereich der Stirnfläche 24 und die ersten Austrittsöffnungen 26 nur im Innenbereich angeordnet sein können, so dass beim Blick auf die Stirnfläche 24 die ersten Eintrittsöffnungen 28 im Randbereich zumindest die ersten Austrittsöffnungen 26 im Innenbereich umschließen. Zur Ausbildung der rechtwinklig verlaufenden Seitenfläche 10 weist das Basissegment 18 eine Lateralfläche 30 auf, die sich rechtwinklig zur Stirnfläche 24 erstreckt und von einer geschlossenen Wandung 32 gebildet ist.

In dem Basissegment 18 ist eine Elektrolytzuführung 34 und eine Elektrolytabsaugung 36 zur Ausbildung eines Elektrolytkreislaufes integriert. Die Elektrolytzuführung 34 hat bezogen auf das quergelegte Figurenblatt einen horizontalen Zuführungskanal 38 zur Verteilung des Elektrolyten in Quer- bzw. Breitenrichtung des Basissegments 18 (Strömungsrichtung durch Pfeile 40 angedeutet), der mit einer Vielzahl von ersten vertikalen Zuführungskanälen 42 (jeweilige Strömungsrichtung durch Pfeil 44 angedeutet) in Fluidverbindung steht. Die ersten vertikalen Zuführungskanäle 42 münden in die ersten Austrittsöffnungen 26 der Stirnfläche 24. Die Elektrolytabsaugung 36 weist eine Vielzahl von ersten vertikalen Absaugkanälen 46 (jeweilige Strömungsrichtung durch Pfeil 48 angedeutet) auf, die über die ersten Eintrittsöffnungen 28 zur Stirnfläche 24 geöffnet sind und mit einem horizontalen Absaugkanal 50 (Strömungsrichtung durch Pfeile 52 angedeutet) in Fluidverbindung stehen.

Das Seitensegment 20 hat zur Ausbildung der angestellten Seitenfläche 12 bzw. zur Ausbildung der Hinterschneidung 14 eine aktivierbare Wirkfläche bzw. Schrägfläche 54, in der ein Lochmuster aus einer Vielzahl von zweiten Austrittsöffnungen 26' ausgebildet ist. Im Randbereich der Schrägfläche 54 und somit im Übergangsbereich der Schrägfläche 54 zur Stirnfläche 24 sind zweite Eintrittsöffnungen 28' ausgebildet. Das Seitensegment 20 hat eine integrale Elektrolytzuführung 56 und eine integrale Elektrolytabsaugung 58, die unabhängig von der Elektrolytzuführung 34 und der Elektrolytabsaugung 36 des Basissegments 18 ansteuerbar sind. Die Elektrolytzuführung 56 sowie die Elektrolytabsaugung 58 haben jeweils zumindest einen in etwa vertikal verlaufenden zweiten Zuführungskanal 42' und zweiten Absaugkanal 46', die zum Einen jeweils mit den zweiten Eintrittsöffnungen 26' bzw. den Austrittsöffnungen 28' zur Zuführung bzw. Absaugung des Elektrolyten auf die bzw. von der Schrägfläche 54 und zum Anderen über eine Vielzahl von Durchbrüchen 60 miteinander in Fluidverbindung stehen.

Die Isolationsschicht 22 erstreckt sich im Wesentlichen in Vertikalrichtung 62 der Elektrode 1 und hat einen Bogenabschnitt 64, der im kantenseitigen Übergangsbereich mündet. Der Bogenabschnitt 64 und eine entsprechend bogenförmige Führung der ersten Zuführkanäle 42 und der Absaugkanäle 46 in der Nähe des Übergangsbereichs erlauben die Ausbildung der Bodenfläche 6 ausschließlich über die Stirnfläche 24 des Basissegments 18. Da die erfindungsgemäße Absaugung zumindest im Randbereich der Schrägfläche 54 und der Stirnfläche 24 erfolgt, sind vorzugsweise in dem Übergangsbereich ausschließlich erste und zweite Eintrittsöffnungen 28, 28' bzw. Absaugkanäle 46 angeordnet, die über die Isolationsschicht 22 voneinander getrennt sind.

Im Folgenden wird ein zweiachsiges Verfahren zur Ansteuerung der Elektrode 1 zur Ausbildung der Absenkung 2 erläutert. Zuerst wird die Elektrode 1 gegenüber dem Werkstück 4 im Bereich der zu bearbeitenden Oberfläche 8 positioniert. Dann wird der Elektrolytkreislauf des Basissegments 18 eingeschaltet. Der Elektrolyt wird über die Elektrolytzuführung 34 durch das Basissegment 18 geführt und tritt aus den ersten Austrittsöfmungen 42 im Bereich der Stirnfläche 24 aus. Der Elektrolyt wird anschließend über die ersten Eintrittsöffnungen 46 von der Stirnfläche 24 bzw. Wirkfläche abgesaugt und dabei durch das Basissegment zurückgeführt. Dann wird eine Kathodenspannung angelegt und die Elektrode 1 in Vertikalrichtung 62 bewegt, so dass die Oberfläche 8 abgesenkt wird bis ausreichend Material 66 abgetragen und die Bodenfläche 6 ausgebildet ist. Aufgrund der Absaugung des Elektrolyten im Randbereich der Stirnfläche 54 bleibt die Lateralfläche 30 trocken, so dass trotz Bestromung die Lateralfläche 30 nicht als Wirkfläche fungiert. Die Seitenfläche 10 wird unmittelbar durch das bzw. beim Absenken der Oberfläche 8 ausgebildet, wobei trotz des Entlangleitens der Lateralfläche 30 an der Seitenfläche 10 durch die Absaugung des Elektrolyten im Randbereich der Stirnfläche 24 bzw. im kantenseitigen Übergangsbereich der Stirnfläche 24 mit der Lateralfläche 30 Störungen der Seitenfläche 10 verhindert werden. Demgegenüber bildet sich aufgrund der Anstellung der Schrägfläche 54 zwischen der Schrägfläche 54 und einer gegenüberliegenden seitlichen Werkstückfläche 68 ein keilförmiger Seitenspalt 70 aus, so dass die Schrägfläche 54 beim Absenken der Oberfläche 8 von der Werkstückfläche 68 großflächig beabstandet ist. Trotzdem ist auch die Schrägfläche 54 aufgrund der Randabsaugung im Bereich der Stirnfläche 24 trocken. Sobald die Bodenfläche 6 ausgebildet ist, wird die Kathodenspannung abgeschaltet, die Vorschubbewegung in Vertikalrichtung 62 gestoppt und anschließend der Elektrolytzufluss 34 abgesperrt. Die Elektrolytabsaugung 36 wird erst dann abgeschaltet, wenn die Bodenfläche 6 ausreichend trocken ist, so dass ein weiterer Materialabtrag oder Ätzangriff verhindert wird.

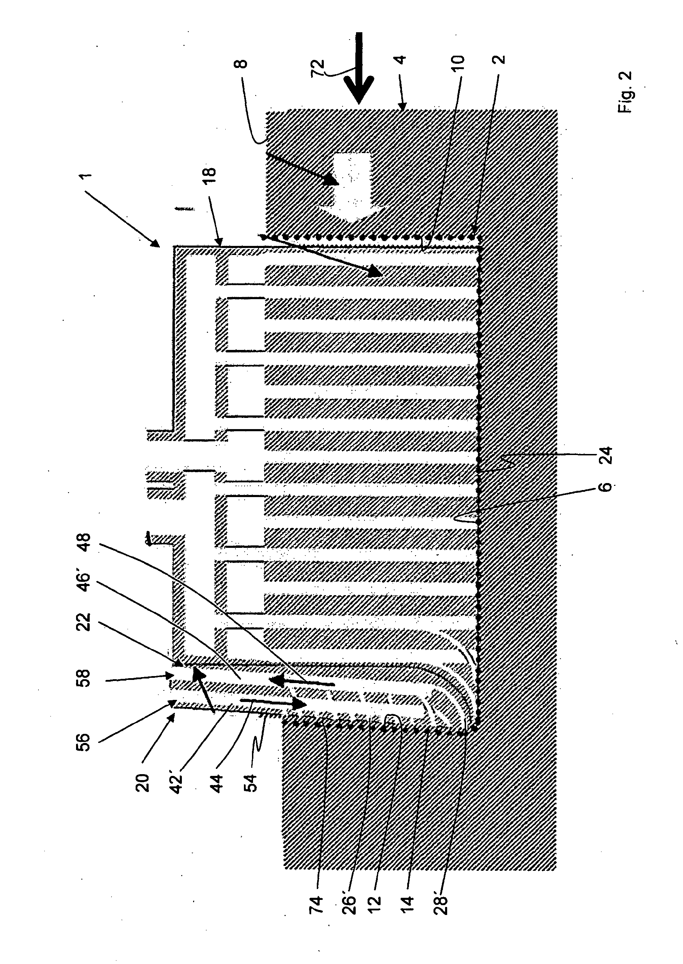

Nach der Ausbildung der Bodenfläche 6 wird gemäß Figur 2 die angestellte Seitenfläche 12 bzw. die Hinterschneidung 14 der Absenkung 2 ausgebildet. Hierzu wird der Elektrolyt über eine Betätigung der Elektrolytzuführung 56 und der Elektrolytabsaugung 58 zur Schrägfläche 54 geführt bzw. von dieser anschließend wieder abgesaugt, so dass nun die Schrägfläche 54 als Wirkfläche dient. Die Stirnfläche 24 des Basissegments 18 bleibt trocken, so dass im Bereich der Bodenfläche 6 kein weiterer Materialabtrag erfolgt. Dann wird das Seitensegment 18 bestromt und die Elektrode 1 gemäß Figur 2 in Querrichtung 72 bewegt, bis ausreichend Material 74 abgetragen und die Seitenfläche 12 bzw. die Hinterschneidung 14 entsprechend ihrer Sollkontur ausgebildet ist. Dann wird die Kathodenspannung abgeschaltet, die Vorschubbewegung in Querrichtung 72 gestoppt und der Elektrolytzufluss 56 unterbrochen. Die Elektrolytabsaugung 58 wird erst dann abgeschaltet, wenn die angestellte Seitenfläche 14 ausreichend trocken ist. Nach der Ausbildung der Seitenfläche 12 wird die Elektrode der Absenkung 2 entnommen. Die Absenkung 2 mit der Bodenfläche 6 sowie den Seitenflächen 10, 12 ist nun auf Sollkontur bearbeitet, wobei durch die erfindungsgemäße Absaugung ein Wirkangriff in benachbarten Bereichen der jeweiligen Wirkflächen 24, 54 verhindert wird, so dass eine nachträgliche Bearbeitung, insbesondere im Übergangsbereich zwischen der Bodenfläche 6 und den Schrägfläche 10, 12, entfällt.

Offenbart ist ein Verfahren zum elektrochemischen Bearbeiten einer Werkstückfläche 8, 68, mit einer Elektrode 1, die zumindest eine Wirkfläche 24, 54 zur Bearbeitung der Werkstückfläche 8, 68 hat, und mit einem Elektrolyten, bei dem der Elektrolyt von der Wirkfläche 24, 54 abgesaugt wird, sowie eine Elektrode 1, die zumindest eine Elektrolytzuführung 34, 56 zur Zuführung des Elektrolyten in den Wirkbereich 24, 54 und eine Elektrolytabsaugung 36, 58 zur Absaugung des Elektrolyten aus dem Wirkbereich 24, 54 aufweist.

## Patentansprüche

1. Verfahren zum elektrochemischen Bearbeiten eines Werkstücks (4) mit einer Elektrode (1), **dadurch gekennzeichnet, dass** die Elektrode zwei getrennt aktivierbare Wirkflächen (24, 54) mit zwei unabhängig ansteuerbaren Elektrolytzuführungen (34, 56) und Elektrolytabsaugungen (36, 58) zur Bearbeitung zweier Werkstückflächen (8, 68) hat, und mit einem Elektrolyten, wobei der Elektrolyt von der aktivierten Wirkfläche (24, 54) abgesaugt wird.

2. Verfahren nach Anspruch 1, wobei der Elektrolyt im Innenbereich der Wirkfläche (24, 54) zugeführt und im Randbereich der Wirkfläche (24, 54) abgesaugt wird.

3. Verfahren nach Anspruch 1 oder 2, wobei der Elektrolyt durch die Elektrode (1) hindurch zur Wirkfläche (24, 54) und durch die Elektrode (1) hindurch von der Wirkfläche (24, 54) abgesaugt wird

4. Verfahren nach Anspruch 1, 2 oder 3, mit den Schritten:
a) Positionieren der Elektrode (1) gegenüber einer zu bearbeitenden Werkstückfläche (8),
b) Einschalten eines Elektrolytkreislaufs mit einer Elektrolytzuführung (34) und einer Elektrolytabsaugung (36, 58) zum Definieren einer Wirkfläche (24),
c) Anlegen einer Kathodenspannung und Bewegen der Elektrode (1) in Vorschubrichtung (62, 72)
d) Bearbeiten der Werkstückfläche (8) auf Sollkontur,
e) Abschalten der Kathodenspannung, Beendigung der Vorschubbewegung (62, 72) und Abschalten des Elektrolytzuflusses (34, 56),
f) Abschalten der Elektrolytabsaugung (36, 58) sobald die bearbeitete erste Werkstücksfläche (6,14) trocken ist, und
g) Wiederholen der Schritte a) bis f) bis alle zu bearbeitenden Werkstückflächen (8, 70) abgesenkt sind, wobei sich die Vorschubrichtung der obigen Elektrode (1) und die Wirkfläche (54) entsprechend den zu bearbeitenden Werkstückflächen (70) ändern.

5. Elektrode (1) zur Durchführung des Verfahrens nach einem der vorhergehenden Ansprüche, mit zwei getrennt aktivierbare Wirkflächen (24. 54) zum elektrochemischen Bearbeiten zumindest einer Werkstückfläche (8, 68), wobei eine integrale Elektrolytzuführung (34) zur Zuführung des Elektrolyten auf die eine Wirkfläche (24) und eine Elektrolytabsaugung (58) zur Absaugung des Elektrolyten von der einen Wirkfläche (24,) ausgebildet sind, **dadurch gekennzeichnet, dass** eine von der ersten Elektrolytzuführung (34) und Elektrolytabsaugung (36) unabhängig ansteuerbare integrale Elektrolytzuführung (56) zur Zuführung des Elektrolyten auf die andere Wirkfläche (54) und eine Elektrolytabsaugung (58) zur Absaugung des Elektrolyten von der anderen Wirkfläche (54) ausgebildet sind.

6. Elektrode nach Anspruch 5, wobei die Elektrolytzuführung (34, 56) und die Elektrolytabsaugung (36, 58) eine Vielzahl von Kanälen (42, 46) umfasst.

7. Elektrode nach Anspruch 5 oder 6, wobei die Wirkfläche (24, 54) eine gelochte Flächenstruktur aufweist, die mit den Kanälen (42, 46) in Fluidverbindung steht.

8. Elektrode nach Anspruch 5 oder 6, wobei die Wirkfläche (24, 54) eine poröse Flächenstruktur aufweist, die mit den Kanälen (42, 46) in Fluidverbindung steht

9. Elektrode nach einem der Ansprüche 5 bis 8, wobei eine Vielzahl von Elektrodensegmenten (18, 20) mit jeweils zumindest einer Wirkfläche (24, 54) vorgesehen sind.

10. Elektrode nach Anspruch 9, wobei die Segmente (18, 20) über eine Isolationsschicht (22) elektrisch voneinander getrennt sind.

## Claims

1. A method for electrochemically processing a workpiece (4) with an electrode (1), **characterised in that** the electrode has two active surfaces (24, 54), which can be activated separately, with two electrolyte-feed means (34, 56) and means for drawing off electrolyte by suction (36, 58) that can be activated independently for processing two workpiece surfaces (8, 68), and with an electrolyte, wherein the electrolyte is drawn off by suction from the activated active surface (24, 54).

2. A method according to claim 1, wherein the electrolyte is fed in in the inner region of the active surface (24, 54) and is drawn off by suction in the edge region of the active surface (24, 54).

3. A method according to claim 1 or 2, wherein the electrolyte is drawn off by suction through the electrode (1) to the active surface (24, 54) and through the electrode (1) from the active surface (24, 54).

4. A method according to claim 1, 2 or 3, having the steps:
a) positioning of the electrode (1) with respect to a workpiece surface (8) that is to be processed,
b) switching-on of an electrolyte circuit with an electrolyte-feed means (34) and a means for drawing off electrolyte by suction (36, 58) in order to define an active surface (24),
c) application of a cathode voltage and movement of the electrode (1) in the advance direction (62, 72),
d) processing of the workpiece surface (8) to give a desired contour,
e) switching-off of the cathode voltage, termination of the advance movement (62, 72), and switching-off of the electrolyte inflow (34, 56),
f) switching-off of the means for drawing off electrolyte by suction (36, 58) as soon as the first processed workpiece surface (6, 14) is dry, and
g) repetition of steps a) to f) until all the workpiece surfaces (8, 70) that are to be processed are machined, wherein the advance direction of the electrode (1) above and the active surface (54) change in accordance with the workpiece surfaces (70) to be processed.

5. An electrode (1) for carrying out the method according to one of the preceding claims, having two active surfaces (24, 54) that can be activated separately for electrochemically processing at least one workpiece surface (8, 68), wherein an integral electrolyte-feed means (34) is formed for feeding the electrolyte to the one active surface (24) and a means for drawing off electrolyte by suction (58) is formed for drawing off the electrolyte by suction from the one active surface (24), **characterised in that** an integral electrolyte-feed means (56) that can be activated independently of the first electrolyte-feed means (34) and the means for drawing off electrolyte by suction (36) is formed for feeding the electrolyte to the other active surface (54) and a means for drawing off electrolyte by suction (58) is formed for drawing off the electrolyte by suction from the other active surface (54).

6. An electrode according to claim 5, wherein the electrolyte-feed means (34, 56) and the means for drawing off electrolyte by suction (36, 58) comprise a plurality of channels (42, 46).

7. An electrode according to claim 5 or 6, wherein the active surface (24, 54) has a perforated surface structure which communicates fluid-wise with the channels (42, 46).

8. An electrode according to claim 5 or 6, wherein the active surface (24, 54) has a porous surface structure which communicates fluid-wise with the channels (42, 46).

9. An electrode according to one of claims 5 to 8, wherein a plurality of electrode segments (18, 20) with in each case at least one active surface (24, 54) is provided.

10. An electrode according to claim 9, wherein the segments (18, 20) are separated electrically from each other by way of an insulating layer (22).

## Revendications

1. Procédé d'usinage électrochimique d'une pièce (4) avec une électrode (1), **caractérisé en ce que** l'électrode présente deux surfaces actives (24, 54) activables séparément avec deux amenées d' électrolyte (34, 56) pouvant être commandées indépendamment et des aspirations d'électrolyte (36, 58) pour l'usinage de deux surfaces de pièce (8, 68), et avec un électrolyte, l'électrolyte étant aspiré hors de la surface active (24, 54).

2. Procédé selon la revendication 1, où l'électrolyte est amenée vers l'intérieur de la surface active (24, 54) et aspirée en périphérie de la surface active (24, 54).

3. Procédé selon la revendication 1 ou 2, où l'électrolyte est aspiré vers la surface active (24, 54) au travers de l'électrode (1) et est aspiré hors de la surface active (24, 54) au travers de l'électrode (1).

4. Procédé selon la revendication 1, 2 ou 3, comprenant les étapes suivantes :
a) positionnement de l'électrode (1) par rapport à une surface de pièce (8) à usiner,
b) activation d'un circuit d'électrolyte avec une amenée d'électrolyte (34) et une aspiration d'électrolyte (36, 58) pour la définition d'une surface active (24),
c) application d'une tension de cathode et déplacement de l'électrode (1) dans une direction d'avancée (62, 72),
d) usinage de la surface de pièce (8) sur un contour de consigne,
e) coupure de la tension de cathode, arrêt du mouvement d'avancée (62, 72) et arrêt de l'amenée d'électrolyte (34, 56),
f) arrêt de l'aspiration d'électrolyte (36, 58) dès que la surface de pièce (6, 14) usinée est sèche, et
g) répétition des étapes a) à f) jusqu'à ce que toutes les surfaces de pièce (8, 70) à usiner aient été abaissées, la direction d'avance de l'électrode (1) susmentionnée et la surface active (54) variant en fonction des surfaces de pièce (70) à usiner.

5. Electrode (1) pour l'exécution du procédé selon l'une des revendications précédentes, avec deux surfaces actives (24, 54) activables séparément pour l'usinage électrochimique d'au moins une surface de pièce (8, 68), une amenée d'électrolyte intégrée (34) pour l'amenée de l'électrolyte vers la première surface active (24) et une aspiration d'électrolyte (58) pour l'aspiration de l'électrolyte hors de la surface active (24) étant formées, **caractérisée en ce qu'**une amenée d'électrolyte intégrée (56) pouvant être commandée indépendamment de la première amenée d'électrolyte intégrée (34) et de l'aspiration d'électrolyte (36) est prévue pour l'amenée de l'électrolyte vers l'autre surface active (54), et une aspiration d'électrolyte (58) est prévue pour l'aspiration de l'électrolyte hors de l'autre surface active (54).

6. Electrode selon la revendication 5, où l'amenée d'électrolyte (34, 56) et l'aspiration d'électrolyte (36, 58) comprennent une pluralité de canaux (42, 46).

7. Electrode selon la revendication 5 ou 6, où la surface active (24, 54) présente une structure de surface perforée en communication fluidique avec les canaux (42, 46).

8. Electrode selon la revendication 5 ou 6, où la surface active (24, 54) présente une structure de surface poreuse en communication fluidique avec les canaux (42, 46).

9. Electrode selon l'une des revendications 5 à 8, où une pluralité de segments d'électrode (18, 20) sont prévus chacun avec au moins une surface active (24, 54).

10. Electrode selon la revendication 9, où les segments (18, 20) sont électriquement séparés l'un de l'autre par une couche isolante (22).
